# FASCICULE DE BREVET EUROPEEN

(11) **EP 2 561 209 B1**
(45) Date de publication et mention de la délivrance du brevet: **16.08.2017**
(21) Numéro de dépôt: 11715589.5
(22) Date de dépôt: 22.03.2011
(51) Int. Cl.: F02K 1/16, F02K 1/76

(54) **SYSTÈME DE COMMANDE DE TYPE HYDRAULIQUE POUR DISPOSITIF D'INVERSION DE POUSSÉE**
HYDRAULISCHES STEUERSYSTEM FÜR EINEN SCHUBUMKEHRER
HYDRAULIC CONTROL SYSTEM FOR A THRUST REVERSAL DEVICE

(30) Priorité: 20.04.2010 FR 1052991
(43) Date de publication de la demande: 27.02.2013
(73) Titulaire: Safran Nacelles, 76700 Gonfreville-l'Orcher (FR)
(72) Inventeur: LE COQ, Vincent, Pierre, Germain, F-14600 L A Riviere Saint Sauveur (FR)
(74) Mandataire: Gaillarde, Frédéric F. Ch.
(86) Numéro de dépôt international: PCT/FR2011/050595
(87) Numéro de publication internationale: WO 2011/131872

(56) Documents cités:
- GB-A- 1 200 800
- GB-A- 2 446 441
- US-A- 4 505 108

## Description

La présente invention se rapporte à une architecture de commande pour dispositif d'inversion de poussée équipant une nacelle de turboréacteur et associé à un dispositif de tuyère variable.

Un avion est mû par plusieurs turboréacteurs logés chacun dans une nacelle abritant également un ensemble de dispositifs d'actionnement annexes lié à son fonctionnement et assurant diverses fonctions lorsque le turboréacteur est en fonctionnement ou à l'arrêt.

Ces dispositifs d'actionnement annexes comprennent, notamment, un système mécanique d'inversion de poussée et un système de tuyère variable.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur permet de renvoyer vers l'avant de la nacelle tout ou partie des flux de gaz éjectés par le turboréacteur, générant de ce fait une contre-poussée qui vient s'ajouter au freinage des roues de l'avion. Pour ce faire, un inverseur de poussée comprend de part et d'autre de la nacelle un capot mobile déplaçable entre, d'une part, une position déployée qui ouvre dans la nacelle un passage destiné au flux dévié lors d'une phase de freinage, et d'autre part, une position d'escamotage qui ferme ce passage lors du fonctionnement normal du turboréacteur ou lorsque l'avion est à l'arrêt.

Les capots mobiles peuvent remplir une fonction de déviation ou simplement d'activation d'autres moyens de déviation.

Dans le cas d'un inverseur à grilles de déviation, la réorientation du flux d'air est effectuée par des grilles de déviation, associées à des volets d'inversion qui bloquent une partie de la veine de circulation d'air, le capot n'ayant qu'une simple fonction de coulissage visant à découvrir ou recouvrir ces grilles de déviation.

Par ailleurs, outre sa fonction d'inversion de poussée, le capot coulissant appartient à la section arrière et présente un côté aval formant la tuyère d'éjection visant à canaliser l'éjection des flux d'air.

La section optimale de la tuyère d'éjection peut être adaptée en fonction des différentes phases de vol, à savoir les phases de décollage, de montée, de croisière, de descente.

Il convient de noter que les phases de fonctionnement de la tuyère variable et de l'inverseur de poussée sont distinctes, la tuyère variable ne pouvant fonctionner lorsque l'inverseur est activé à l'atterrissage.

Selon les modes de réalisation, la tuyère variable peut être réalisée à partir d'un ou plusieurs éléments mobiles dédiés, tels que des volets pivotants ou portion de capot translatable ou cette fonction peut être remplie par le capot mobile lui-même par des mouvements de translation de faible amplitude n'activant pas la fonction d'inversion de poussée.

Pour une description approfondie et détaillée de différents modes de réalisation, on pourra se reporter aux documents FR 2 922 058, FR 2 902 839, FR 2 922 059, entre autres.

Afin de permettre l'entraînement du capot mobile dans sa fonction d'inversion de poussée et l'entraînement de la tuyère variable, il convient généralement de recourir à des vérins simple effet dédiés, ou à des vérins double action possédant une double tige.

Le document GB 2 446 441 décrit une architecture de commande pour nacelle de turboréacteur comprenant un dispositif d'inversion de poussée associé à un dispositif de tuyère variable. Le système décrit dans le document GB 2 446 441 utilise des vérins double action.

Pour des raisons d'encombrement et de masse de la nacelle, il conviendrait idéalement de pouvoir utiliser des vérins simple action pour mettre en oeuvre les deux fonctions.

Un des problèmes posés par la mise en oeuvre de vérins simple action pour commander les deux dispositifs ou fonctionnalités est le respect des normes de sécurité aéronautiques et plus particulièrement des critères de ségrégation de commande pour le dispositif d'inversion de poussée et des critères de disponibilité pour le dispositif de tuyère variable.

Pour un dispositif d'inversion de poussée à commande hydraulique tel qu'existant par exemple sur l'A340, chaque capot mobile est associé à, d'une part, deux verrous dits primaires installés sur les actionneurs supérieurs et inférieurs dont la commande à action hydraulique est permise par un pilotage conjoint de deux vannes de fermeture du circuit d'alimentation hydraulique des vérins, et d'autre part, à un verrou tertiaire à pilotage électrique indépendant.

Pour des raisons de sécurité, les pilotages des deux vannes et du verrou tertiaire doivent s'effectuer selon des lignes de commandes parfaitement ségréguées.

Un but de la présente invention est de remédier à ces inconvénients et de présenter une architecture permettant l'utilisation de vérins simple action dans l'actionnement de dispositifs de tuyère variable et d'inversion de poussée associés tout en respectant les exigences de sécurité aéronautiques.

Pour ce faire, la présente invention se rapporte à un système de commande de type hydraulique pour dispositif d'inversion de poussée équipant une nacelle de turboréacteur et associé à un dispositif de variation de tuyère selon les caractéristiques de la revendication 1. Ainsi, en prévoyant une unité de contrôle assurant la ségrégation entre un pilotage en mode inverseur et un pilotage en mode tuyère, il est possible d'utiliser des actionneurs simples action pour remplir les deux types de modes de fonctionnement.

Par ailleurs, la présence d'une synchronisation mécanique entre les vérins et la possibilité de mettre les vérins en communication fluide entre eux augmente la disponibilité du dispositif tout en respectant la ségrégation du mode inverseur.

On notera que par l'expression de type hydraulique, on inclut également les systèmes pneumatiques.

Avantageusement, le système comprend au moins deux unités de pilotage en mode tuyère aptes à piloter chacune au moins un vérin, l'ensemble de valves de l'unité de contrôle étant apte à permettre une communication hydraulique entre les lignes d'alimentation hydrauliques des vérins en provenance de chaque unité de pilotage tuyère.

Avantageusement encore, la mise en communication hydraulique des vérins pilotés par des unités de pilotage tuyère différentes est commandée en cas de défaillance d'une unité de pilotage.

Plus particulièrement, on notera que les vérins seront avantageusement arrangés par paires, contrôlées chacune par une unité de pilotage.

De manière préférentielle, le système comprend au moins un verrou dit primaire, et de préférence deux verrous dits primaires.

De manière préférentielle encore, les verrous primaires sont pilotés hydrauliquement par l'unité de pilotage des vérins en mode inverseur.

Avantageusement, le pilotage hydraulique des vérins liés à l'unité de pilotage en mode inverseur est associé à au moins une vanne de blocage, appartenant notamment à l'unité de contrôle, permettant la distribution de puissance hydraulique sur réception d'un signal de déverrouillage d'au moins un verrou primaire, de préférence de deux verrous primaires.

Avantageusement encore, le signal de commande est hydraulique et résulte de la mise en pression des verrous dits primaires à fin d'ouverture de ces derniers.

De manière préférentielle, le système comprend au moins un verrou dit tertiaire.

Avantageusement, les unités de pilotage et/ou de contrôle sont commandées, directement ou indirectement, par une unité centrale de contrôle et de commande du turboréacteur, couramment désignée sous les termes FADEC ou EEC.

De manière avantageuse, au moins une partie des vérins est équipé d'au moins un capteur de position, notamment de type RVDT et/ou LVDT.

La présente invention se rapporte également à une nacelle pour turboréacteur équipé d'un dispositif d'inversion de poussée et d'un dispositif de tuyère variable associé, caractérisée en ce que ces dispositifs sont actionnés par un système de commande selon l'invention.

La présente invention sera mieux comprise à la lumière de la description détaillée qui suit en regard du dessin annexé dans lequel la figure unique est une représentation schématique d'un exemple de réalisation d'un système de commande selon l'invention.

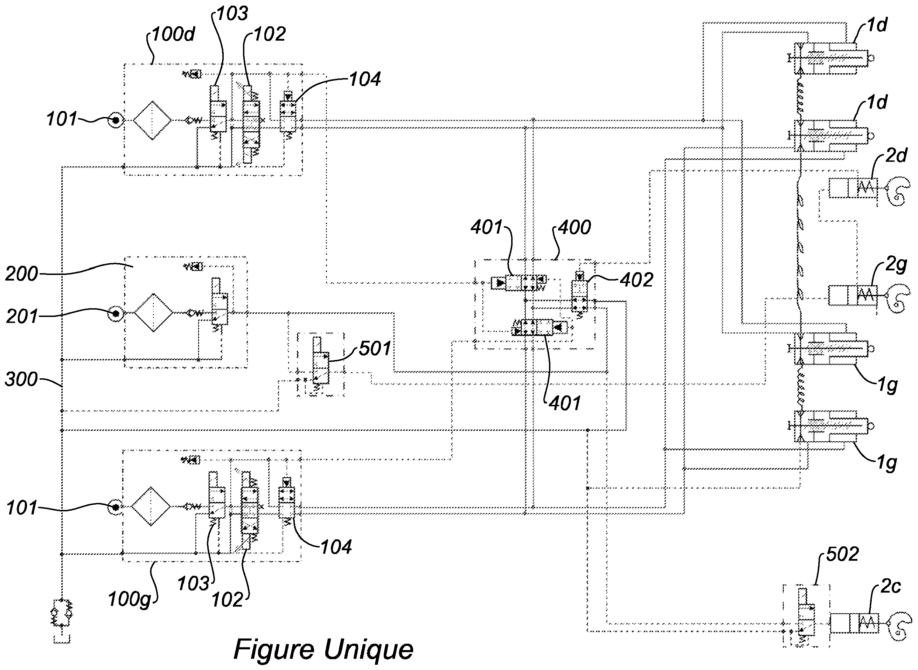

La figure 1 représente schématique un système de commande hydraulique pour un capot mobile d'un dispositif d'inversion de poussée comprenant également un dispositif de tuyère variable (non visible).

Pour ce faire, ce capot mobile est apte à être entraîné en translation par quatre actionneurs 1 hydrauliques.

Plus précisément, on se place dans le cas d'un capot mobile unique sensiblement périphérique à la nacelle, les quatre actionneurs 1 étant disposés par paire de chaque côté d'un axe longitudinal de la nacelle. On notera la paire droite d'actionneurs 1d et la paire gauche d'actionneurs 1g.

Chaque paire d'actionneurs 1d, 1g est associée à un verrou dit primaire 2d, 2g, les deux verrous étant également disposés de part et d'autre d'un axe longitudinal de la nacelle.

Un verrou dit tertiaire 2c complète le système de sécurité du dispositif d'inversion de poussée.

Conformément à l'invention, les actionneurs 1d, 1g sont des actionneurs simple action ne comprenant qu'un piston mobile à l'intérieur d'un unique cylindre.

Plus précisément, les actionneurs 1d, 1g sont des actionneurs hydrauliques à vis permettant des déplacements précis compte tenu de l'application considérée.

L'actionnement de chaque actionneur 1d, 1g s'effectue par un circuit d'alimentation et de retour hydraulique qui sera détaillé par la suite.

Le pilotage des actionneurs 1d, 1g est effectué par plusieurs unités de pilotage, à savoir deux unités de pilotage 100d, 100g selon un mode de tuyère variable, et une unité de pilotage 200 selon un mode d'inversion de poussée.

Chaque unité de pilotage 100d, 100g, 200 est connectée à une alimentation 101, 201 en fluide sous pression ainsi qu'à un circuit 300 de retour du fluide sous pression.

Les unités de pilotage 100d, 100g selon un mode tuyère alimentent chacune parallèlement en fluide hydraulique une paire d'actionneurs 1d, 1g. Pour des raisons de sécurité, les actionneurs affectés à chaque unité de pilotage 100d, 100g seront croisés, c'est-à-dire que l'unité de pilotage 100d alimentera un actionneur droit 1d et un actionneur gauche 1g. Il en va de même pour l'unité de pilotage 101g.

Les unités de pilotage 100d, 100g en mode tuyère sont sensiblement équivalentes aux unités de pilotage correspondantes décrites dans le document GB 2 446 441. Il convient toutefois de noter, que le document GB 2 446 441 décrit une unité de pilotage en mode tuyère par actionneur, et ne communiquant pas fluidiquement entre elles.

Chaque unité de pilotage 100d, 100g comprend une servovalve 102 directionnelle à trois voies, une valve d'isolation d'alimentation 103 à commande électrique et une valve d'isolation totale 104.

La servovalve 102 est utilisée pour commander en continu la pression dans la grande chambre de chaque actionneur asymétrique 1 d, 1 g piloté et en contrôler le déploiement. Il est à noter que la petite chambre des actionneurs à alimenter à la pression du réseau 101, lorsque la fonction de variation de tuyère est activée, par le biais des électrovannes 103.

La valve d'isolation d'alimentation 103 est utilisée pour activer le contrôle tuyère et permettre le passage du fluide depuis l'alimentation 101 à travers l'unité de contrôle 100d, 100g.

La valve d'isolation totale 104 est utilisée pour désactiver et isoler totalement l'unité de contrôle 100d, 100g du circuit.

Chaque unité de pilotage 100d, 100g en mode tuyère est commandée par un contrôleur avion ou turboréacteur courramment désigné sous les acronymes FADEC (Full Authority Digital Engine Controler) ou EEC (Electronic Engine Controler). Chaque unité de pilotage 100d, 100g sera commandée simultanéement par une des deux voies du FADEC.

L'unité de pilotage 200 en mode inverseur est sensiblement fonctionnellement équivalente à celle décrite dans le document GB 2 446 441 et comprend une vanne 203 apte à permettre la mise sous pression des actionneurs 1d, 1g pour un fonctionnement en mode inverseur de poussée.

Conformément à l'invention, le système comprend une unité de contrôle additionnelle 400 reliant hydrauliquement les actionneurs 1d, 1g entre eux et permet de relier hydrauliquement l'unité de pilotage 200 en mode inverseur aux actionneurs 1d, 1g simple action.

Plus précisément, l'unité de contrôle additionnelle 400 permet d'activer le mode inverseur en connectant l'unité de pilotage 200 au circuit hydraulique des actionneurs 1d, 1g. De manière complémentaire, elle permet également éventuellement de drainer une paire d'actionneurs 1d, 1g en cas de désactivation d'une unité de pilotage 100 en mode tuyère et permet de drainer tous les actionneurs 1d, 1g en cas de désactivation totale des deux unités de pilotage 100 en mode tuyère.

L'unité de contrôle est également équipée de valves 401 commandées par les unités de pilotage en mode tuyère 100 selon différents modes, à savoir : court-circuit lorsque le système fonctionne en mode inverseur ou lorsqu'une unité de pilotage tuyère 100 est désactivée, et isolation lorsque le système fonctionne en mode tuyère.

L'unité de contrôle comprend également une vanne 402 participant à l'implémentation des fonctionnalités décrites ci-dessus et apte à être commandée par un signal de déverrouillage des verrous primaires 2d, 2g afin d'activer le fonctionnement en mode d'inversion de poussée. Ainsi, l'inverseur de poussée n'est activé qu'après déverrouillage des verrous 2d, 2g.

Pour ce faire, les verrous 2d, 2g sont reliés hydrauliquement à l'unité de pilotage inverseur 200 et activés par l'intermédiaire d'une vanne 501 pilotée électriquement. Après mise sous pression des verrous 1d, 1g, un signal hydraulique est envoyé vers la vanne 402 pour ouvrir le circuit hydraulique d'inverseur.

L'unité de pilotage d'inverseur 200 alimente également le verrou tertiaire 2c également activé par une vanne 502 pilotée électriquement.

On notera également que chaque paire d'actionneurs 1d, 1g est équipé d'au moins un capteur de position de type RVDT ou résolveur, permettant de contrôler la position de la tuyère variable et au moins un LVDT (linear variable differential transformer) pour contrôler la fonction d'inversion de poussée (déploiement complet des actionneurs).

Dans un mode de fonctionnement de tuyère variable, les valves d'isolation 103 sont actionnés pour délivrer la puissance hydraulique à l'unité de pilotage 100 chargée de la redistribuer aux actionneurs 1d, 1g par l'intermédiaire de la servovalve 102 réglant le déploiement ou rétractation des actionneurs 1d, 1g.

Dans le cas où une défaillance d'une unité de pilotage de tuyère 100 serait détectée par le FADEC, l'unité de pilotage 100 défaillante est désactivée en mode isolé par la vanne d'isolation 104. L'unité de contrôle additionnelle 400 est mise en mode court-circuit. Les circuits hydrauliques des deux paires d'actionneurs 1d, 1g communiquent et la seconde unité de pilotage 100 continue à commander sa paire d'actionneur.

Les actionneurs étant synchronisés mécaniquement par arbre flexible (communément désigné sous le terme « flexshaft »), les actionneurs pilotés transmettent leur mouvement aux actionneurs défaillants.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de commande de type hydraulique pour dispositif d'inversion de poussée équipant une nacelle de turboréacteur et associé à un dispositif de variation de tuyère, le dispositif d'inversion de poussée comprenant, d'une part, au moins un capot mobile, et d'autre part, au moins deux verrous dits primaires (2d, 2g) et au moins un verrou dit tertiaire (2c), ledit système de commande hydraulique comprenant une pluralité d'actionneurs simple action (1d, 1g) qui sont des vérins synchronisés entre eux et aptes à entraîner en translation le capot mobile ainsi que le dispositif de tuyère variable le cas échéant, par l'intermédiaire d'au moins une unité de pilotage (100d, 100g) des vérins selon un mode de tuyère variable, et d'au moins une unité de pilotage (200) des vérins selon un mode d'inverseur de poussée, **caractérisé en ce que** le système de commande comprend au moins une unité additionnelle de contrôle (400) reliant hydrauliquement les vérins entre eux, les lignes d'alimentation hydrauliques en provenance de l'unité de pilotage des vérins en mode tuyère et de l'unité de pilotage des vérins en mode inverseur se trouvant aptes à communiquer hydrauliquement entre elles, et comprenant une pluralité de valves de commande (401, 402) agencées de manière telle que lorsque l'unité de pilotage des vérins en mode tuyère est active, un signal hydraulique correspondant commande les valves de l'unité de contrôle dans une position telle que les lignes d'alimentation hydraulique des vérins en provenance de l'unité de pilotage selon un mode inverseur sont coupées.

2. Système selon la revendication 1, **caractérisé en ce qu'**il comprend au moins deux unités de pilotage (100d, 100g) en mode tuyère aptes à piloter chacune au moins un vérin, l'ensemble de valves (401, 402) de l'unité de contrôle (400) étant apte à permettre une communication hydraulique entre les lignes d'alimentation hydrauliques des vérins en provenance de chaque unité de pilotage tuyère.

3. Système selon la revendication 2, **caractérisé en ce que** la mise en communication hydraulique des vérins (1d, 1g) pilotés par des unités de pilotage (100d, 100g) tuyère différentes est commandée en cas de défaillance d'une unité de pilotage.

4. Système selon l'une quelconque des revendications 1 à 3, **caractérisé en ce qu'**il comprend au moins un verrou dit primaire, et de préférence deux verrous dits primaires (2d, 2g).

5. Système selon la revendication 4, **caractérisé en ce que** les verrous primaires (2d, 2g) sont pilotés hydrauliquement par l'unité de pilotage (200) des vérins en mode inverseur.

6. Système selon l'une quelconque des revendications 4 ou 5, **caractérisé en ce que** le pilotage hydraulique des vérins (1d, 1g) liés à l'unité de pilotage (200) en mode inverseur est associé à au moins une vanne de blocage (402), appartenant notamment à l'unité de contrôle (400), permettant la distribution de puissance hydraulique sur réception d'un signal de déverrouillage d'au moins un verrou primaire (2d, 2g), de préférence de deux verrous primaires.

7. Système selon la revendication 6, **caractérisé en ce que** le signal de commande est hydraulique et résulte de la mise en pression des verrous dits primaires (2d, 2g) à fin d'ouverture de ces derniers.

8. Système selon l'une quelconque des revendications 1 à 7, **caractérisé en ce que** les unités de pilotage (100d, 100g, 200) et/ou de contrôle (400) sont commandées, directement ou indirectement, par une unité centrale de contrôle et de commande du turboréacteur, couramment désignée sous les termes FADEC ou EEC.

9. Système selon l'une quelconque des revendications 1 à 8, **caractérisé en ce qu'**au moins une partie des vérins (1 d, 1 g) est équipée d'au moins un capteur de position, notamment de type RVDT et / ou LVDT.

10. Système selon l'une quelconque des revendications 1 à 9, **caractérisé en ce que** le contrôle de la section de tuyère variable est continu, par exemple par le biais d'un moins une servovalve (102).

11. Système selon la revendication 10, **caractérisé en ce que** la servovalve (102) peut être de type à trois voies et adaptée à la régulation de vérins asymétriques où une chambre non contrôlée est alimentée à pression constante.

12. Nacelle pour turboréacteur équipé d'un dispositif d'inversion de poussée et d'un dispositif de tuyère variable associé, **caractérisée en ce que** ces dispositifs sont actionnés par un système de commande selon l'une quelconque des revendications 1 à 11.

## Patentansprüche

1. Steuersystem der hydraulischen Art für eine Vorrichtung zur Schubumkehr, die eine Turbostrahltriebwerksgondel ausstattet und mit einer Vorrichtung zur Düsenvariation assoziiert ist, wobei die Vorrichtung zur Schubumkehr einerseits mindestens eine bewegliche Verkleidung und andererseits mindestens als primär bezeichnete Verriegelungen (2d, 2g) und mindestens eine als tertiär bezeichnete Verriegelung (2c) umfasst, wobei das hydraulische Steuersystem eine Vielzahl von einfach wirkenden Betätigungsvorrichtungen (1d, 1g) umfasst, die untereinander synchronisierte Zylinder sind und ausgelegt sind, die bewegliche Verkleidung sowie gegebenenfalls die variable Düsenvorrichtung mit Hilfe von mindestens einer Lenkeinheit (100d, 100g) der Zylinder gemäß einem variablen Düsenmodus und mindestens einer Lenkeinheit (200) der Zylinder gemäß einem Schubumkerhmodus in Translation zu versetzen, **dadurch gekennzeichnet, dass** das Steuersystem mindestens eine zusätzliche Kontrolleinheit (400) umfasst, die die Zylinder hydraulisch untereinander verbindet, wobei die hydraulischen Versorgungsleitungen von der Lenkeinheit der Zylinder im Düsenmodus und der Lenkeinheit der Zylinder im Umkehrmodus ausglegt sind, um hydraulisch untereinander zu kommunizieren, und eine Vielzahl von Steuerventilen (401, 402) umfassen, die derart angeordnet sind, dass, wenn die Lenkeinheit der Zylinder im Düsenmodus aktiv ist, ein entsprechendes hydraulisches Signal die Ventile der Kontrolleinheit in eine derartige Position steuert, dass die hydraulischen Versorgungslinien der Zylinder aus der Lenkeinheit gemäß einem Umkehrmodus unterbrochen werden.

2. System nach Anspruch 1, **dadurch gekennzeichnet, dass** es mindestens zwei Lenkeinheiten (100d, 100g) im Düsenmodus umfasst, die ausgelegt sind, um jeweils mindestens einen Zylinder zu lenken, wobei die Einheit von Ventilen (401, 402) der Kontrolleinheit (400) ausgelegt ist, um eine hydraulische Kommunikation zwischen den hydraulischen Versorgungslinien der Zylinder aus jeder Düsenlenkeinheit zu ermöglichen.

3. System nach Anspruch 2, **dadurch gekennzeichnet, dass** die hydraulische Verbindung der Zylinder (1d, 1g), gesteuert durch verschiedene Düsenlenkeinheiten (100d, 100g), im Fall eines Defekts einer Lenkeinheit gesteuert wird.

4. System nach einem der Ansprüche 1 bis 3, **dadurch gekennzeichnet, dass** es mindestens eine als primär bezeichnete Verriegelung und vorzugsweise zwei als primär bezeichnete Verriegelungen (2d, 2g) umfasst.

5. System nach Anspruch 4, **dadurch gekennzeichnet, dass** die primären Verriegelungen (2d, 2g) hydraulisch durch die Lenkeinheit (200) der Zylinder im Umkehrmodus gelenkt werden.

6. System nach einem der Ansprüche 4 oder 5, **dadurch gekennzeichnet, dass** die hydraulische Lenkung der Zylinder (1d, 1g), verbunden mit der Lenkeinheit (200) im Umkehrmodus, mit mindestens einem Blockierschieber (402) assoziiert ist, der insbesondere zur Kontrolleinheit (400) gehört, der die Verteilung des hydraulischen Drucks beim Empfang eines Verriegelungssignals von mindestens einer primären Verriegelung (2d, 2d), vorzugsweise von zwei primären Verriegelungen, ermöglicht.

7. System nach Anspruch 6, **dadurch gekennzeichnet, dass** das Steuersystem hydraulisch ist und sich aus der Unterdrucksetzung der als primär bezeichneten Verriegelungen (2d, 2g) ergibt, zur Öffnung dieser Letzteren.

8. System nach einem der Ansprüche 1 bis 7, **dadurch gekennzeichnet, dass** die Lenk- (100d, 100g, 200) und/oder Kontrolleinheiten (400) direkt oder indirekt durch eine zentrale Kontroll- und Steuereinheit des Turbostrahltriegwerks gesteuert werden, gewöhnlich bezeichnet durch die Ausdrücke FADEC oder EEC.

9. System nach einem der Ansprüche 1 bis 8, **dadurch gekennzeichnet, dass** mindestens ein Teil der Zylinder (1d, 1g) mit mindestens einem Positionssensor, insbesondere vom Typ RVDT und/oder LVDT, ausgestattet ist.

10. System nach einem der Ansprüche 1 bis 9, **dadurch gekennzeichnet, dass** die Kontrolle des variablen Düsenabschnitts ununterbrochen ist, z. B. mit Hilfe von mindestens einem Servoventil (102).

11. System nach Anspruch 10, **dadurch gekennzeichnet, dass** das Servoventil (102) der Art mit drei Wegen sein und an die Regulierung von asymmetrischen Zylindern angepasst sein kann, wobei eine nicht kontrollierte Kammer mit konstantem Druck versorgt wird.

12. Turbostrahltriebwerksgondel, die mit einer Schubumkehrvorrichtung und mit einer assoziierten variablen Düsenvorrichtung ausgestattet ist, **dadurch gekennzeichnet, dass** diese Vorrichtungen durch ein Steuersystem nach einem der Ansprüche 1 bis 11 betätigt werden.

## Claims

1. A hydraulic type monitoring system for a thrust reverser device equipping a turbojet engine nacelle and associated to a nozzle variation device, the thrust reverser device comprising, on the one hand, at least one movable cowl, and on the other hand, at least two locks called primary locks (2d, 2g) and at least one lock called tertiary lock (2c), said hydraulic monitoring system comprising a plurality of simple action actuators (1d, 1g) which are cylinders synchronized with each other and capable of driving the movable cowl in translation as well as the variable nozzle device, if necessary, via at least one unit (100d, 100g) for driving the cylinders in a variable nozzle mode, and via at least one unit (200) for driving the cylinders in a thrust reverser mode, **characterized in that** the monitoring system comprises at least one additional control unit (400) hydraulically connecting the cylinders to each other, the hydraulic supply lines from the drive unit of the cylinders in the nozzle mode and from the drive unit of the cylinders in the thrust reverser mode being capable of hydraulically communicating with each other, and comprising a plurality of monitoring valves (401, 402) arranged such that when the drive unit of the cylinders in the nozzle mode is active, a corresponding hydraulic signal monitors the cylinders of the control unit in a position such that the hydraulic supply lines of the cylinders from the drive unit in a thrust reverser mode are turned off.

2. The system according to claim 1, **characterized in that** it comprises at least two drive units (100d, 100g) in the nozzle mode each capable of driving at least one cylinder, the set of valves (401, 402) of the control unit (400) being arranged to allow a hydraulic communication between the hydraulic supply lines of the cylinders from each nozzle drive unit.

3. The system according to claim 2, **characterized in that** the hydraulic communication of the cylinders (1d, 1g) driven by different nozzle drive units (100d, 100g) is monitored in case of failure of a drive unit.

4. The system according to any one of claims 1 to 3, **characterized in that** it comprises at least one lock called primary lock, and preferably two locks called primary locks (2d, 2g).

5. The system according to claim 4, **characterized in that** the primary locks (2d, 2g) are hydraulically driven by the drive unit (200) of the cylinders in the thrust reverser mode.

6. The system according to any one of claims 4 or 5, **characterized in that** the hydraulic driving of the cylinders (1d, 1g) linked to the drive unit (200) in the thrust reverser mode is associated to at least one blocking valve (402), belonging in particular to the control unit (400), allowing the hydraulic power distribution upon reception of an unlocking signal from at least one primary lock (2d, 2g), preferably from two primary locks.

7. The system according to claim 6, **characterized in that** the monitoring signal is hydraulic and results from the pressing of the locks called primary locks (2d, 2g) for opening purpose of said primary locks.

8. The system according to any one of claims 1 to 7, **characterized in that** the drive (100d, 100g, 200) and/or control (400) unit(s) are, directly or indirectly, monitored by a central control and monitoring unit of the turbojet engine, commonly referred to as FADEC or EEC.

9. The system according to any one of claims 1 to 8, **characterized in that** at least one part of the cylinders (1d, 1g) is equipped with at least one position sensor, in particular of the RVDT and/or LVDT type.

10. The system according to any one of claims 1 to 9, **characterized in that** the control of the variable nozzle section is continuous, for example through at least one servo-valve (102).

11. The system according to claim 10, **characterized in that** the servo-valve (102) may be of the three-way type and adapted for the regulation of the asymmetric cylinders where an uncontrolled chamber is supplied at constant pressure.

12. A nacelle for a turbojet engine equipped with a thrust reverser device and an associated variable nozzle device, **characterized in that** these devices are actuated by a monitoring system according to any one of claims 1 to 11.
